# FASCICULE DE BREVET EUROPEEN

(11) **EP 2 237 996 B1**
(45) Date de publication et mention de la délivrance du brevet: **21.08.2013**
(21) Numéro de dépôt: 09705462.1
(22) Date de dépôt: 22.01.2009
(51) Int. Cl.: B60R 21/215

(54) **ELEMENT DE SUPPORT COMPRENANT UN BOITIER DE COUSSIN GONFLABLE**
HALTEVORRICHTUNG MIT EINEM AIRBAGGEHÄUSE
SUPPORT MEMBER INCLUDING AN AIRBAG HOUSING

(30) Priorité: 29.01.2008 FR 0850531
(43) Date de publication de la demande: 13.10.2010
(73) Titulaire: Faurecia Intérieur Industrie, 92000 Nanterre (FR)
(72) Inventeur: BONAVENTURE, Franck, F-95270 Belloy en France (FR); BRUNET, Michael, F-60650 SAINT AUBIN EN BRAY (FR); DEMORTAIN, Pierre, F-75010 Paris (FR); LE HOANG, Daniel, F-95260 BEAUMONT SUR OISE (FR)
(74) Mandataire: Domenego, Bertrand
(86) Numéro de dépôt international: PCT/FR2009/050089
(87) Numéro de publication internationale: WO 2009/095589

(56) Documents cités:
- DE-U1- 29 511 172
- US-A1- 2001 040 365
- US-A1- 2004 041 379

## Description

La présente invention concerne un élément de support de véhicule automobile du type comprenant un boîtier de réception d'un coussin gonflable pour véhicule automobile, ledit boîtier étant fixé audit élément par au moins un moyen de fixation traversant un orifice dudit élément et fixé au boîtier.

L'invention concerne également une planche de tableau de bord comprenant un tel élément de support et un véhicule automobile comprenant une telle planche de bord.

Les planches de tableau de véhicule automobile comprennent généralement un boîtier pour coussin gonflable du côté passager afin de protéger celui-ci en cas de choc contre le véhicule automobile. Le boîtier est fixé, par exemple par des vis, à un élément de support formant le corps de la planche de tableau de bord autour d'une ouverture pratiquée dans l'élément de support afin de laisser un passage pour le coussin gonflable lors de son déploiement. Le document US 2004/041379A1 décrit un élément de support selon le préambule de la revendication 1.

Cependant, lors du déploiement du coussin gonflable, le gaz permettant le gonflement du coussin monte en pression à l'intérieur du boîtier et a tendance à exercer des efforts sur les parois du boîtier qui se déforment sous l'effet de ces efforts. Ces déformations se répercutent sur les moyens de fixation du boîtier à la planche de bord et entraînent une contrainte radiale importante sur les vis.

Ainsi, il arrive souvent que l'élément de support se casse au voisinage des moyens de fixation, ce qui peut être dangereux pour le passager si des morceaux de planche de tableau de bord sont projetés dans l'habitacle du véhicule automobile.

Pour pallier cet inconvénient, on prévoit d'ajouter des moyens de fixation du boîtier à l'élément de support afin de répartir les efforts exercés par le boîtier du coussin gonflable et réduire les contraintes exercées sur chaque moyen de fixation. Selon une autre solution, le boîtier de coussin gonflable est renforcé par l'ajout de pièces de renforts rapportées afin que le boîtier subisse moins de déformations lors du déploiement du coussin gonflable.

Cependant, de telles solutions sont coûteuses du fait de l'ajout de pièces de fixation ou de renfort.et entraînent un ajout de masses conséquent à la planche de tableau de bord, ce qui est contraire aux objectifs de l'industrie automobile de réduction de la masse d'un véhicule automobile.

L'un des objectifs de l'invention est de pallier ces inconvénients en proposant un élément de support du type précité dans lequel le déploiement du coussin gonflable n'entraîne pas de contraintes importante sur les moyens de fixation du boîtier, sans ajout de moyens de fixation ou d'éléments de renfort sur le boîtier de coussin gonflable.

A cet effet, l'invention concerne un élément de support du type précité, dans lequel le moyen de fixation est maintenu dans l'orifice avec un jeu, de sorte que le moyen de fixation est apte à se déplacer en rotation, dans un plan contenant l'axe dudit orifice, à l'intérieur de l'orifice sous l'effet de la déformation du boîtier de sorte à absorber ladite déformation provoquée par le déploiement du coussin gonflable.

Selon d'autres caractéristiques de l'élément de support :
- l'orifice de l'élément présente une forme sensiblement tronconique, le boîtier étant disposé du côté de plus grand diamètre dudit orifice ;
- l'angle d'ouverture de l'orifice de l'élément est au moins sensiblement égal à 10°;
- le boîtier comprend un bord de fixation, ledit bord de fixation comprenant un orifice disposé en regard de l'orifice de l'élément de support et étant traversé par le moyen de fixation ;
- le moyen de fixation est une vis traversant l'orifice de l'élément de support et vissée au boîtier ;
- le moyen de fixation comprend une tête et une tige, la tête étant disposée du côté de plus petit diamètre de l'orifice de l'élément de support, la tige traversant l'orifice jusqu'au boîtier ; et
- le diamètre de la tige du moyen de fixation est sensiblement égal au plus petit diamètre de l'orifice de l'élément de support.

L'invention concerne également une planche de tableau de bord comprenant un élément de support tel que décrit ci-dessus et un véhicule automobile comprenant une telle planche de tableau de bord.

D'autres aspects et avantages de l'invention apparaîtront à la lecture de la description qui suit, donnée à titre d'exemple et faites en références aux dessins annexés, dans lesquels :
- la Fig. 1 est une représentation schématique partielle en coupe d'une planche de tableau de bord comprenant un élément de support selon l'invention,
- la Fig. 2 est une représentation schématique agrandie de la zone Il de la Fig. 1.

La description est faite en référence à une planche de tableau de bord, cependant il est entendu que l'élément de support de l'invention peut être employé pour d'autres pièces d'un véhicule automobile, tel qu'un volant ou un panneau de garnissage de l'habitacle du véhicule automobile.

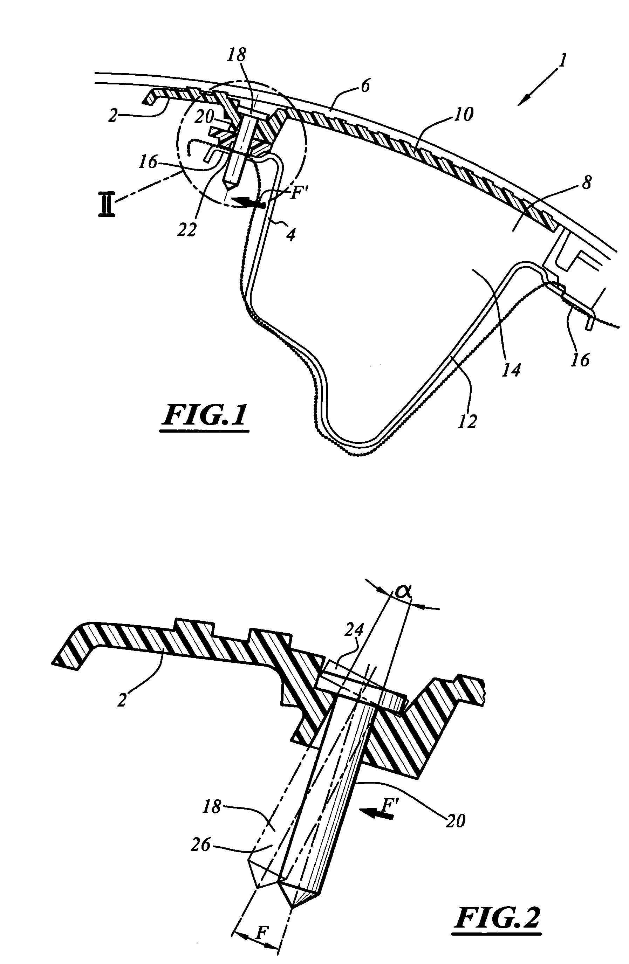

En référence à la Fig. 1, on décrit une planche de tableau de bord 1 comprenant un élément de support 2 et un boîtier 4 de coussin gonflable.

De façon classique, l'élément de support 2 forme le corps de la planche de tableau de bord 1 et/ou le canal de tir du coussin gonflable et est réalisé en un matériau plastique offrant la rigidité nécessaire à la planche 1. L'élément de support 2 est recouvert par une couche d'aspect 6 comprenant par exemple une couche de mousse et une peau d'aspect recouvrant la couche de mousse ou tout simplement une couche de plastique dure.

L'élément de support 2 comprend une ouverture 8 permettant le passage d'un coussin gonflable lors de son déploiement. Cette ouverture 8 est par exemple fermée par un volet 10, fixé à l'élément de support 2 et mobile en rotation par rapport à cet élément, dont le déplacement est entraîné par le déploiement du coussin gonflable et qui déchire la couche d'aspect 6 afin de permettre le déploiement du coussin gonflable dans l'habitacle du véhicule automobile.

Le boîtier de coussin gonflable 4 est fixé à l'élément de support 2 sur la périphérie de l'ouverture 8 de l'élément 2. Le boîtier 4 s'étend de l'autre côté de l'élément de support 2 par rapport à la couche d'aspect 6. Le boîtier comprend au moins une paroi 12 au sein de laquelle sont logés le coussin gonflable et le dispositif de génération de gaz permettant son déploiement (non représentés). Le boîtier comprend une ouverture 14 disposée en regard de l'ouverture 8 de l'élément de support 2 afin de permettre le passage du coussin gonflable.

La paroi 12 comprend un bord de fixation 16 s'étendant sensiblement dans le même plan que l'ouverture 14 et disposé contre l'élément de support 2 sur la périphérie de l'ouverture 8.

Le boîtier 4 est fixé à l'élément de support 2 par au moins un moyen de fixation 18 traversant un orifice 20 prévu dans l'élément de support et fixé au bord de fixation 16 de la paroi 12. Le moyen de fixation 18 est par exemple une vis, vissée dans un orifice 22 prévu dans le bord de fixation ou un goujon traversant l'orifice 22 et retenant le boîtier 4. L'orifice 22 est disposé en regard de l'orifice 20, qui traverse l'élément de support 2 au voisinage de son ouverture 8. Le moyen de fixation 18 comprend une tête 24 et une tige 26 s'étendant sous la tête 24. La tête 24 est disposée de l'autre côté de l'orifice 20 par rapport au bord de fixation 16 et la tige 26 traverse l'orifice 20 jusqu'au bord de fixation 16.

Comme représenté sur la Fig. 2, l'orifice 20 présente une forme sensiblement tronconique, c'est-à-dire que le diamètre de sa section varie linéairement d'un côté à l'autre de l'élément de support 2. Le plus petit diamètre de l'orifice 20 se trouve du côté de la couche d'aspect 6 et de la tête 24 du moyen de fixation 18, tandis que le plus grand diamètre de l'orifice 20 se trouve du côté du boîtier 4 et de son bord de fixation 16. Le diamètre de la tige 26 du moyen de fixation 18 est sensiblement égal au plus petit diamètre de l'orifice 20. Selon un mode de réalisation, l'angle d'ouverture α de l'orifice 20, c'est-à-dire l'angle d'ouverture du cône dans lequel s'inscrit l'orifice 20, est au moins sensiblement égal à 10°. Selon un mode de réalisation, cet angle α peut être supérieur à 5°.

Du fait de la forme tronconique de l'orifice 20, le moyen de fixation 18 est disposé avec un jeu dans l'orifice 20, comme le montre la Fig. 2 où plusieurs positions du moyen de fixation 18 sont représentées. En particulier, le moyen de fixation 18 est apte à se déplacer en rotation dans un plan contenant l'axe dudit orifice 20 à l'intérieur de l'orifice 20, comme représenté par la flèche F de la Fig. 2.

Une telle fixation du boîtier de coussin gonflable 4 permet d'absorber la déformation de la paroi 12 du boîtier lors du déploiement du coussin gonflable et d'empêcher cette déformation d'exercer des contraintes radiales importantes sur l'élément de support 2. Sur la Fig. 1, on a représenté en traits pointillés le boîtier 4 déformé lors du déploiement du coussin gonflable. Comme on peut le constater et comme représenté par la flèche F', la déformation entraîne un déplacement radial de la paroi 12. Ce déplacement selon la flèche F' entraîne une rotation du moyen de fixation 18 à l'intérieur de l'orifice 20, ce qui a pour effet d'absorber la déformation de la paroi 12 sans la répercuter sur l'élément de support 2.

L'angle α est choisi pour que la rotation du moyen de fixation 18 absorbe la plus grande partie du déplacement de la paroi 12 et que les contraintes radiales exercées sur l'élément de support 2 ne soient pas suffisantes pour casser l'élément de support 2 lors du déploiement du coussin gonflable.

Selon un mode de réalisation, l'élément de support 2 comprend au moins deux moyens de fixation 18 et deux orifices 20 tels que décrit ci-dessus. Cependant, un seul moyen de fixation 18 est suffisant pour absorber la déformation du boîtier 4. Le boîtier peut alors être fixé par des vis classiques en d'autres points de l'élément de support 2 ou par collage ou soudage.

L'élément de support 2 décrit ci-dessus permet donc de pallier aux inconvénients de la déformation du boîtier 4 lors du déploiement du coussin gonflable sans ajout de moyens de fixation supplémentaires, le moyen de fixation 18 pouvant remplacer une vis de fixation habituellement utilisée, ou de moyens de renfort du boîtier 2. Ainsi, l'invention permet de réduire le nombre de pièces et de réaliser des économies. De plus, le moyen de fixation 18 étant par exemple réalisé en matériau plastique, il n'y a pas d'ajout de masse sur le véhicule automobile.

## Revendications

1. Elément de support (2) de véhicule automobile comprenant un boîtier (4) de réception d'un coussin gonflable pour véhicule automobile, ledit boîtier (4) étant fixé audit élément (2) par au moins un moyen de fixation (18) traversant un orifice (20) dudit élément et fixé au boîtier (4), **caractérisé en ce que** le moyen de fixation (18) est maintenu dans l'orifice (20) avec un jeu, de sorte que le moyen de fixation (18) est apte à se déplacer en rotation, dans un plan contenant l'axe dudit orifice (20), à l'intérieur de l'orifice (20) sous l'effet de la déformation du boîtier (4) de sorte à absorber ladite déformation provoquée par le déploiement du coussin gonflable.

2. Elément de support selon la revendication 1, **caractérisé en ce que** l'orifice (20) de l'élément (2) présente une forme sensiblement tronconique, le boîtier (4) étant disposé du côté de plus grand diamètre dudit orifice (20).

3. Elément de support selon la revendication 2, **caractérisé en ce que** l'angle d'ouverture (α) de l'orifice (20) de l'élément (2) est au moins sensiblement égal à 10°.

4. Elément de support selon l'une quelconque des revendications 1 à 3, **caractérisé en ce que** le boîtier (4) comprend un bord de fixation (16), ledit bord de fixation (16) comprenant un orifice (22) disposé en regard de l'orifice (20) de l'élément de support (2) et étant traversé par le moyen de fixation (18).

5. Elément de support selon l'une quelconque des revendication 1 à 4, **caractérisé en ce que** le moyen de fixation (18) est une vis traversant l'orifice (20) de l'élément de support (2) et vissée au boîtier (4).

6. Elément de support selon la revendication 2 ou 3, ou la revendication 4 ou 5 lorsqu'elle dépend de la revendication 2 ou 3, **caractérisé en ce que** le moyen de fixation (18) comprend une tête (24) et une tige (26), la tête (24) étant disposée du côté de plus petit diamètre de l'orifice (20) de l'élément de support (20), la tige (26) traversant l'orifice (20) jusqu'au boîtier (4).

7. Elément de support selon la revendication 6, **caractérisé en ce que** le diamètre de la tige (26) du moyen de fixation (18) est sensiblement égal au plus petit diamètre de l'orifice (20) de l'élément de support (2).

8. Planche de tableau de bord de véhicule automobile, **caractérisée en ce qu'**elle comprend un élément de support (2) selon l'une quelconque des revendications 1 à 7.

9. Véhicule automobile comprenant une planche de tableau de bord (1) selon la revendication 8.

## Patentansprüche

1. Halteelement (2) für ein Kraftfahrzeug, mit einem Gehäuse (4) zur Aufnahme eines aufblasbaren Kissens für das Kraftfahrzeug, wobei das Gehäuse (4) an dem besagten Element (2) fixiert ist mittels wenigstens eines Fixiermittels (18), das eine Öffnung (20) des besagten Elements durchquert und das am Gehäuse (4) fixiert ist, **dadurch gekennzeichnet, dass** das Fixiermittel (18) in der Öffnung (20) derart mit Spiel gehalten ist, dass das Fixiermittel (18) in der Lage ist, sich, unter der Wirkung der Deformation des Gehäuses (4), im Inneren der Öffnung (20) drehend zu bewegen in einer Ebene, die die Achse der besagten Öffnung (20) enthält, um die besagte Deformation, die von der Entfaltung des aufblasbaren Kissens hervorgerufen wird, zu absorbieren.

2. Halteelement gemäß Anspruch 1, **dadurch gekennzeichnet, dass** die Öffnung (20) des Elements (2) eine im Wesentlichen konische Form hat, wobei das Gehäuse (4) auf der Seite des größten Durchmessers der Öffnung (20) angeordnet ist.

3. Halteelement gemäß Anspruch 2, **dadurch gekennzeichnet, dass** der Öffnungswinkel (α) der Öffnung (20) des Elements (2) zumindest im Wesentlichen gleich 10° ist.

4. Haltelement gemäß irgendeinem der Ansprüche 1 bis 3, **dadurch gekennzeichnet, dass** das Gehäuse (4) eine Fixierrand (16) aufweist, wobei der Fixierrand (16) eine Öffnung (22) aufweist, die der Öffnung (20) des Haltelements (2) gegenüberliegt und die von dem Fixiermittel (18) durchquert ist.

5. Haltelement gemäß irgendeinem der Ansprüche 1 bis 4, **dadurch gekennzeichnet, dass** das Fixiermittel (18) eine Schraube ist, die die Öffnung (20) des Haltelements (2) durchquert und in das Gehäuse (4) geschraubt ist.

6. Haltelement gemäß Anspruch 2 oder 3, oder gemäß Anspruch 4 oder 5, insofern er von Anspruch 2 oder 3 abhängig ist, **dadurch gekennzeichnet, dass** das Fixiermittel (18) einen Kopf (24) und einen Schaft (26) aufweist, wobei der Kopf (24) auf der Seite des kleinsten Durchmessers der Öffnung (20) des Halteelements (20) angeordnet ist, wobei der Schaft (26) die Öffnung (20) bis zum Gehäuse (4) durchquert.

7. Haltelement gemäß Anspruch 6, **dadurch gekennzeichnet, dass** der Durchmesser des Schafts (26) des Fixiermittels (18) im Wesentlichen gleich dem kleinsten Durchmesser der Öffnung (20) des Halteelements (2) ist.

8. Armaturenbrett für ein Kraftfahrzeug, **dadurch gekennzeichnet, dass** es aufweist ein Halteelement (2) gemäß einem der Ansprüche 1 bis 7.

9. Kraftfahrzeug mit einem Armaturenbrett (1) gemäß Anspruch 8.

## Claims

1. Support member (2) for a motor vehicle comprising a housing (4) for receiving an airbag for a motor vehicle, the housing (4) being fixed to the member (2) by at least one fixing means (18) which extends through a hole (20) of the member and which is fixed to the housing (4), **characterised in that** the fixing means (18) is retained in the hole (20) with play so that the fixing means (18) is capable of pivoting, in a plane which contains the axis of the hole (20), inside the hole (20) under the action of the deformation of the housing (4) so as to absorb the deformation brought about by the deployment of the airbag.

2. Support member according to claim 1, **characterised in that** the hole (20) of the member (2) is substantially frustoconical, the housing (4) being arranged at the side of the hole (20) having the largest diameter.

3. Support member according to claim 2, **characterised in that** the opening angle (α) of the hole (20) of the member (2) is at least substantially 10°.

4. Support member according to any one of claims 1 to 3, **characterised in that** the housing (4) comprises a fixing edge (16), the fixing edge (16) comprising a hole (22) which is arranged opposite the hole (20) of the support member (2) and through which the fixing means (18) extends.

5. Support member according to any one of claims 1 to 4, **characterised in that** the fixing means (18) is a screw which extends through the hole (20) of the support member (2) and which is screwed to the housing (4).

6. Support member according to claim 2 or claim 3, or claim 4 or claim 5 when dependent on claim 2 or claim 3, **characterised in that** the fixing means (18) comprises a head (24) and a shank (26), the head (24) being arranged at the side of the hole (20) of the support member (20) having the smallest diameter, the shank (26) extending through the hole (20) as far as the housing (4).

7. Support member according to claim 6, **characterised in that** the diameter of the shank (26) of the fixing means (18) is substantially equal to the smallest diameter of the hole (20) of the support member (2).

8. Motor vehicle dashboard panel, **characterised in that** it comprises a support member (2) according to any one of claims 1 to 7.

9. Motor vehicle comprising a dashboard panel (1) according to claim 8.
